# EUROPEAN PATENT APPLICATION

(11) **EP 4 852 334 A1**
(43) Date of publication of application: **09.12.2026**
(21) Application number: 25804571.5
(22) Date of filing: 28.10.2025
(51) Int. Cl.: H04B 1/59

(54) **TRANSPONDER MONITORING METHOD AND SYSTEM, DEVICE, STORAGE MEDIUM, AND PROGRAM PRODUCT**

(30) Priority: 27.03.2025 CN 202510372455
(71) Applicant: CRSC Research & Design Institute Group Co., Ltd., Beijing 100070 (CN)
(72) Inventor: XU, Yanwen, Beijing 100070 (CN); DING, Huan, Beijing 100070 (CN); ZHANG, Shengwen, Beijing 100070 (CN); ZHANG, Fusong, Beijing 100070 (CN); KONG, Fanxu, Beijing 100070 (CN); WANG, Mingxi, Beijing 100070 (CN); YAN, Bing, Beijing 100070 (CN)
(74) Representative: Samson & Partner Patentanwälte mbB
(86) International application number: PCT/CN2025/130664
(87) International publication number: WO 2026/199910

(57) **Abstract**

The present invention discloses a transponder monitoring method and system, a device, a storage medium, and a program product, and relates to the technical field of railway device monitoring. The method comprises: when detecting that a train pulls in and pulls out, generating train passing information, and transmitting the train passing information to a monitoring operation and maintenance device; receiving a first transponder activation and monitoring instruction transmitted by the monitoring operation and maintenance device, the first transponder activation and monitoring instruction being generated by the monitoring operation and maintenance device based on the train passing information; transmitting first activation energy to a transponder according to the first transponder activation and monitoring instruction; and receiving a first energy response signal transmitted by the transponder after acquiring the first activation energy, and monitoring the transponder through the first energy response signal. By the method, activation and monitoring on the transponder is adaptively started at least once during an interval of two-time passing of the train, and the timeliness and efficiency of monitoring on the transponder are ensured; and moreover, a normal working function of the transponder is prevented from being affected when the train passes, thus the traffic safety is ensured, and the fault rate of the transponder is reduced.

## Description

### TECHNICAL FIELD

The present invention relates to the technical field of railway device monitoring, and specifically relates to a transponder monitoring method and system, a device, a storage medium, and a program product.

### BACKGROUND

A transponder is a point-type device used for performing ground-to-train information transmission at specific locations. It is usually installed on a sleeper in the middle of a track and remains in a dormant status. When a train passes, electromagnetic energy transmitted through an onboard antenna Balise Transmission Module (BTM) activates the transponder, causing it to transmit stored data message to the train. This provides the train with fixed and real-time variable information such as basic line parameters and train operation target data. The transponder is a key device for ensuring traffic safety and improving transportation efficiency. Therefore, it is very necessary to regularly monitor the performance and faults of the transponder.

At present, there are mainly two ways to monitor the transponder. One method is to monitor the transponder by maintenance personnel performing periodic inspection, which is time-consuming, labor-intensive, and inefficient. The other method is to utilize a transponder monitoring device to perform scheduled inspection on the transponder (i.e., periodically emitting electromagnetic energy to the transponder to acquire stored data messages) and then transmit inspection information back to a control room to determine whether the transponder works normally, however, this method will cause mutual interference when antennas of an onboard device and the transponder monitoring device simultaneously emit the electromagnetic energy to the transponder, thereby affecting the onboard device to normally receive the data messages transmitted by the transponder.

### SUMMARY

The present invention provides a transponder monitoring method and system, a device, a storage medium, and a program product, aiming to solve the problems that a transponder is currently monitored by maintenance personnel performing periodic inspection, which is time-consuming, labor-intensive, and inefficient, a transponder monitoring device is utilized to perform scheduled inspection on the transponder, and when antennas of an onboard device and the transponder monitoring device simultaneously emit electromagnetic energy to the transponder, mutual interference will be caused, thereby affecting the onboard device to normally receive data messages transmitted by the transponder.

In a first aspect, the transponder monitoring method provided by the embodiment of the present invention is applied to a transponder monitoring system, and the transponder monitoring system comprises: a response monitoring device and a monitoring operation and maintenance device which is arranged below a transponder; and the method is executed by the response monitoring device, and comprises:
when detecting that a train pulls in and pulls out, generating train passing information, and transmitting the train passing information to the monitoring operation and maintenance device;
receiving a first transponder activation and monitoring instruction transmitted by the monitoring operation and maintenance device, the first transponder activation and monitoring instruction being generated by the monitoring operation and maintenance device based on the train passing information;
transmitting first activation energy to the transponder according to the first transponder activation and monitoring instruction; and
receiving a first energy response signal transmitted by the transponder after acquiring the first activation energy, and monitoring the transponder through the first energy response signal.

In a second aspect, the transponder monitoring system provided by the embodiment of the present invention comprises: a response monitoring device and a monitoring operation and maintenance device which is arranged below the transponder;
the response monitoring device comprises:
a train passing information generation and transmission module configured for when detecting that a train pulls in and pulls out, generating train passing information, and transmitting the train passing information to the monitoring operation and maintenance device;
a first instruction receiving module configured for receiving a first transponder activation and monitoring instruction transmitted by the monitoring operation and maintenance device, the first transponder activation and monitoring instruction being generated by the monitoring operation and maintenance device based on the train passing information;
an energy transmission module configured for transmitting first activation energy to the transponder according to the first transponder activation and monitoring instruction; and
a monitoring module configured for receiving a first energy response signal transmitted by the transponder after acquiring the first activation energy, and monitoring the transponder through the first energy response signal.

In a third aspect, the embodiment of the present invention provides an electronic device, which comprises:
at least one processor; and
a memory in communication connection with the at least one processor; and
the memory stores a computer program that can be executed by the at least one processor, and the at least one processor executes the transponder monitoring method in any embodiment of the present invention by executing the computer program.

In a fourth aspect, the embodiment of the present invention also provides a computer-readable storage medium, the computer-readable storage medium stores a computer instruction, and the computer instruction is used for enabling a processor to execute the transponder monitoring method in any embodiment of the present invention.

In a fifth aspect, the embodiment of the present invention also provides a computer program product which comprises a computer program, and the computer program implements the transponder monitoring method in any embodiment of the present invention when executed by a processor.

According to the technical solution in the embodiments of the present invention, the method comprises: when detecting that the train pulls in and pulls out, generating the train passing information, and transmitting the train passing information to the monitoring operation and maintenance device; receiving the first transponder activation and monitoring instruction transmitted by the monitoring operation and maintenance device, the first transponder activation and monitoring instruction being generated by the monitoring operation and maintenance device based on the train passing information; transmitting the first activation energy to the transponder according to the first transponder activation and monitoring instruction; and receiving the first energy response signal transmitted by the transponder after acquiring the first activation energy, and monitoring the transponder through the first energy response signal. According to the method, after detecting that the train pulls in and pulls out, the first activation energy is transmitted to the transponder, and the first energy response signal transmitted by the transponder is received, thus activation and monitoring on the transponder can be adaptively started at least once during an interval of two-time passing of the train, the timeliness of monitoring on the transponder is ensured, the monitoring efficiency is improved, and the normal working function of the transponder is prevented from being affected when the train passes; moreover, the number of starts of the transponder is reduced through an adaptive starting mechanism, therefore, the failure rate of the transponder is decreased, and furthermore, the frequency and cost of maintenance and replacement are reduced; and the transponder is monitored through the first energy response signal, so that the transponder with a hidden fault danger or fault condition can be early warned, effectively ensuring safe operation of the train.

It is to be understood that the content described herein is not intended to identify the key or essential features of the embodiments of the present invention, nor to limit the scope of the present invention. Other features of the present invention will become easily understood through the following description.

### BRIEF DESCRIPTION OF THE DRAWINGS

To describe the embodiments of the present invention or the technical solutions in the prior art more clearly, the following briefly introduces the accompanying drawings required for describing the embodiments or the descriptions in the prior art. Apparently, the accompanying drawings in the following description show merely some embodiments of the present invention, and a person of ordinary skill in the art may still derive other drawings from these accompanying drawings without creative efforts.
FIG. 1 is a flow chart of a transponder monitoring method provided by an embodiment of the present invention;
FIG. 2 is a schematic diagram of a baseband signal extraction principle of a transponder monitoring method provided by an embodiment of the present invention;
FIG. 3 is a schematic diagram of a data analysis logic of a transponder monitoring method provided by an embodiment of the present invention;
FIG. 4 is a system architecture schematic diagram of a transponder monitoring method provided by an embodiment of the present invention;
FIG. 5 is a schematic structural diagram of a transponder monitoring system provided by an embodiment of the present invention;
FIG. 6 is a schematic structural diagram of a response monitoring device in a transponder monitoring system provided by an embodiment of the present invention; and
FIG. 7 is a schematic structural diagram of an electronic device for implementing embodiments of the present invention.

### DETAILED DESCRIPTION

In order to specify the objective, technical solution and advantage of the examples of the present invention, we shall clearly and completely describe the technical solution in the examples of the present invention in combination with the drawings in the examples of the present invention as follows, it is obvious that the described examples are a part of the embodiments of the present invention, but not embody all examples. Based on the examples in the present invention, all other examples obtained by a person skilled in the art without doing the creative work belong to the protection scope of the present invention.

It is to be noted that the terms "first," "second," etc., in the specification and claims of the present invention and in the above accompanying drawings are used for distinguishing similar objects and are not necessarily used for describing a specific order or sequence. It is to be understood that the data used in this manner can be interchanged where appropriate so that the embodiments of the present invention described herein can be implemented in sequences other than those illustrated or described herein. In addition, the terms "comprising" and "having" and any of their variations are intended to cover non-exclusive inclusion; for example, a process, method, system, product, or device that comprises a series of steps or units is not necessarily limited to the steps or units specifically listed, but may comprise other steps or units that are not explicitly listed or that are inherent to these processes, methods, products, or devices.

It is to be noted that a way of monitoring a transponder by maintenance personnel performing periodic inspection is time-consuming, labor-intensive, and inefficient; and in a way of utilizing a transponder monitoring device to perform scheduled inspection on the transponder, when antennas of an onboard device and the transponder monitoring device simultaneously emit electromagnetic energy to the transponder, mutual interference will be caused, thereby affecting the onboard device to normally receive data messages transmitted by the transponder.

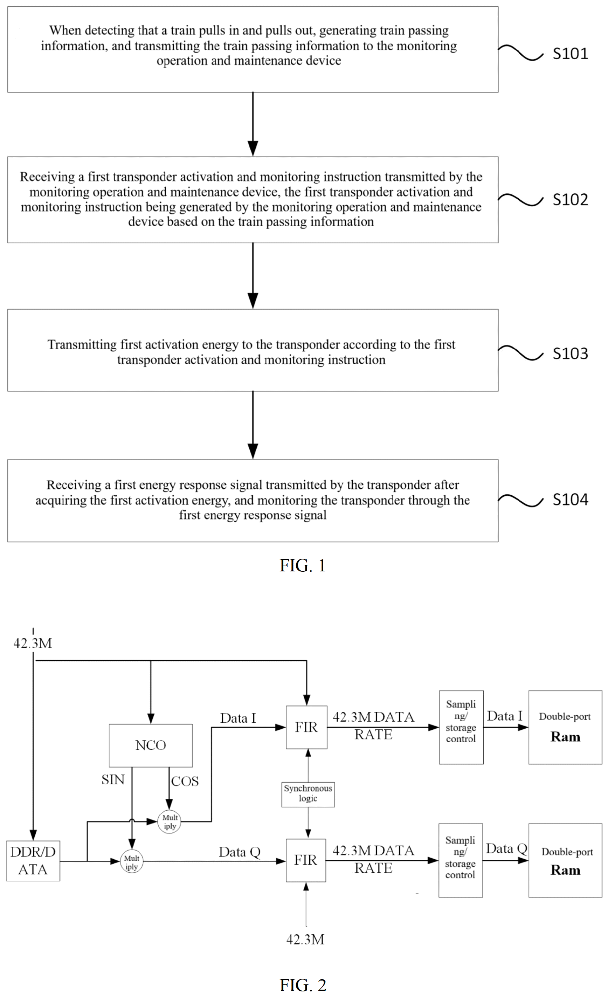

Based on this, the embodiment of the present invention provides a transponder monitoring method, FIG. 1 is a flow chart of a transponder monitoring method provided by an embodiment of the present invention, and the embodiment of the present invention can be applied to scenarios for monitoring working status, fault condition and the like of the transponder. The method can be executed by the response monitoring device in a transponder monitoring system, the device can be implemented in a form of software and/or hardware, optionally, an electronic device, and the electronic device is preferably a mobile terminal, a desktop computer, a notebook computer, a server, and the like.

As shown in FIG. 1, the transponder monitoring method provided by the embodiment of the present invention is applied to the transponder monitoring system, and the transponder monitoring system comprises: a response monitoring device and a monitoring operation and maintenance device which is arranged below the transponder.

The response monitoring device can be understood as a device for monitoring the working status of the transponder and transmitted message information, and receiving signals transmitted by the transponder and accordingly determining whether the transponder works normally and whether the transmitted data is correct. The monitoring operation and maintenance device can be understood as a device that is deployed indoors and used for monitoring the status of the transponder and giving an alarm for abnormity, and can be specifically used for transmitting a monitoring instruction to the response monitoring device and receiving transponder related data returned by the response monitoring device, and can display, store and give a fault alarm for real-time or historical related data reflecting the status of the transponder after determination processing. Optionally, the monitoring operation and maintenance device can be an indoor industrial personal computer, a server, and the like; when the monitoring operation and maintenance device is the server, an analysis software system can be operated to automatically perform efficient analysis on a large number of transponder signals, and an analysis result, a monitoring status and the like are stored; and the analysis result and the monitoring status can be visited by a remote browser, thereby improving the monitoring efficiency and accuracy.

Optionally, communication transmission between the response monitoring device and the monitoring operation and maintenance device is performed in a power carrier mode.

Specifically, power carrier modems are deployed in the response monitoring device and around the monitoring operation and maintenance device, and thus communication data can be extracted and modulated from a power cable. The communication data are transmitted directly by the power cable in the power carrier mode, therefore, the integration of device power supply and communication of an existing railway line is realized, additional communication devices and wiring cost are reduced, overall working efficiency is improved, and moreover, the advantages of high anti-interference capability, high safety, high transmission rate, wide coverage range and the like are achieved. The communication transmission between the response monitoring device and the monitoring operation and maintenance device can also be performed in a wireless communication mode and the like, which is not limited in the embodiments.

The method is executed by the response monitoring device and specifically comprises the following steps.

In S101, when detecting that a train pulls in and pulls out, train passing information is generated, and the train passing information is transmitted to the monitoring operation and maintenance device.

The train passing information can be understood as information that can accurately reflect the passing condition of the train at a specific transponder location, and the train passing information can comprise a code that reflects the passing of the train, the time of the train pulling in and pulling out, the location information of the transponder and the like.

In this embodiment, the mode of the response monitoring device detecting the train pulling in and pulling out can be that acquisition devices such as a vibrating sensor, an infrared sensor, and a camera are arranged around the response monitoring device, and signals, images and the like of the train pulling in and pulling out are acquired and transmitted to the response monitoring device so as to detect whether there is a train pulling in and pulling out. When it is detected that the train pulls in and pulls out, the train passing information is generated and transmitted to the monitoring operation and maintenance device so as to inform the monitoring operation and maintenance device of the information that the train just passes.

In S102, a first transponder activation and monitoring instruction transmitted by the monitoring operation and maintenance device is received, the first transponder activation and monitoring instruction is generated by the monitoring operation and maintenance device based on the train passing information.

The first transponder activation and monitoring instruction can be understood as an automatic instruction to ensure that the transponder is activated and monitored at least once during the interval of two-time passing of the train.

In this embodiment, after receiving the train passing information, the monitoring operation and maintenance device will immediately generate at least one first transponder activation and monitoring instruction and transmit the first transponder activation and monitoring instruction to the response monitoring device.

In S103, first activation energy is transmitted to the transponder according to the first transponder activation and monitoring instruction.

The first activation energy can be understood as activation energy generated according to the first transponder activation and monitoring instruction, and it can be a 27MHz energy signal and is used for activating the transponder to enter the working status.

In this embodiment, the response monitoring device actively transmits the first activation energy to the transponder according to the received first transponder activation and monitoring instruction so as to activate the transponder.

In S104, a first energy response signal transmitted by the transponder after acquiring the first activation energy is received, and the transponder is monitored through the first energy response signal.

The first energy response signal can be understood as a signal transmitted by the transponder utilizing the first activation energy. The first energy response signal can comprise information stored by the transponder or real-time information received from a lineside electronic unit (LEU), such as basic line parameters (like line slope, and track sections), line speed information (like maximum allowable line speed, and maximum allowable train speed), temporary speed limit information (like temporary speed limit information provided for the train when the train operating speed is limited due to construction and the like), whistling information, and train positioning information.

In this embodiment, the first energy response signal transmitted by the transponder using the acquired first activation energy is received; and by extracting and analyzing the information that can reflect the working status of the transponder in the first energy response signal, such as the status parameter information like amplitude and frequency of the first energy response signal, and verifying transponder message data contained in the first energy response signal, whether the transponder is faulty or whether the working status is normal can be determined.

With reference to the above description, the determination result can also be transmitted to the monitoring operation and maintenance device for display, storage and/or alarm, and the extracted status parameter information and transponder message data can also be transmitted to the monitoring operation and maintenance device for further analysis and determination, for example, the extracted status parameter information and the transponder message data are compared with received historical status parameter information and transponder message data, and whether the performance of the transponder degrades can be determined through the change of the status parameter information and the accuracy of the message data; if the performance of the transponder degrades seriously, an early warning signal can be transmitted to inform maintenance personnel of checking and replacement; and the extracted status parameter information and transponder message data can also be compared with the received historical status parameter information of other similar transponders to determine whether the transponder is interfered.

It is to be understood that a fault alarm will be given when the transponder is determined to be faulty or the working status is abnormal, and the fault alarm can be displayed by showing the faulty transponder in red on a node topology diagram, or by broadcasting the faulty transponder through a voice alarm; the fault alarm can also be displayed in an event status bar in a highlighted red flashing way; or, fault information can be pushed to the maintenance personnel by SMS, email, or other means. At the same time, the status parameter information, the transponder message data, operation records, and historical fault events can be stored to facilitate subsequent management and review.

It needs to be noted that the response monitoring device is always in an on status, namely, the response monitoring device can normally receive the signals transmitted by the transponder, receive the train pulling in and pulling out signals or images transmitted by the acquisition equipment, complete data processing and other works, and does not transmit the activation energy to the transponder in real time to monitor the transponder.

According to the transponder monitoring method provided by the embodiment, the method comprises: when detecting that the train pulls in and pulls out, generating the train passing information, and transmitting the train passing information to the monitoring operation and maintenance device; receiving the first transponder activation and monitoring instruction transmitted by the monitoring operation and maintenance device, the first transponder activation and monitoring instruction being generated by the monitoring operation and maintenance device based on the train passing information; transmitting the first activation energy to the transponder according to the first transponder activation and monitoring instruction; and receiving the first energy response signal transmitted by the transponder after acquiring the first activation energy, and monitoring the transponder through the first energy response signal. According to the method, after detecting that the train pulls in and pulls out, the first activation energy is transmitted to the transponder, and the first energy response signal transmitted by the transponder is received, thus activation and monitoring on the transponder can be adaptively started at least once during an interval of two-time passing of the train, the timeliness of monitoring on the transponder is ensured, the monitoring efficiency is improved, and the normal working function of the transponder is prevented from being affected when the train passes; moreover, the number of starts of the transponder is reduced through an adaptive starting mechanism, therefore, the failure rate of the transponder is decreased, and furthermore, the frequency and cost of maintenance and replacement are reduced; and the transponder is monitored through the first energy response signal, so that the transponder with a hidden fault danger or fault condition can be early warned, effectively ensuring safe operation of the train.

As a first optional embodiment of this embodiment, the transponder monitoring system further comprises at least one vibrating sensor, and the vibrating sensor surrounds the response monitoring device and is arranged on steel rails around the response monitoring device; and the power of the vibrating sensor is provided by the response monitoring device.

An output signal of the vibrating sensor is a waveform voltage signal of -5 V to 5 V, and the amplitude and frequency of the waveform are linearly related to vibration characteristics.

By way of example, two vibrating sensors can be deployed on the steel rails on both sides at a distance of 1 meter from the vibrating sensors, with the two vibrating sensors on each side spaced 1 meter apart.

Correspondingly, the step that when detecting that the train pulls in and pulls out, train passing information is generated specifically comprises the following steps.

In a1), the received signal outputted by each vibrating sensor is transformed into a frequency domain signal, and whether the signal outputted by the vibrating sensor has train passing features is determined according to an amplitude value of each frequency domain signal in a specific frequency range.

The train passing features can be understood as features reflected by vibration signals generated by the track vibrating when the train passes.

In this embodiment, after the signal outputted by each vibrating sensor is received, each signal is transformed into a frequency domain in modes such as fast Fourier transform, the frequency domain signals between 120 Hz and 6 kHz are intercepted according to the operating characteristics of a high-speed train, and the amplitude values of the frequency domain signals are computed; and if the amplitude values are greater than a set threshold, it is determined that the signal outputted by the vibrating sensor has the train passing features, namely it is considered that the train passes the location with the vibrating sensor.

In b1), if the signal has the train passing features, whether the duration of the train passing features is greater than a set time threshold is determined, and if yes, the signal having the train passing features is determined to be a single complete train passing signal.

In this embodiment, if the signal has the train passing features, whether the duration of the train passing features is greater than the set time threshold is determined, and it is to be understood that the time threshold can be set according to the common time that the high-speed train passes the transponder. If the duration of the train passing features is greater than the set time threshold, the signal having the train passing features and signals without the train passing features within a certain time adjacent to this signal can be jointly determined to be the single complete train passing signal.

In c1), in the same time period, if the number of the vibrating sensors having the single complete train passing signal accounts for more than half of the number of all vibrating sensors arranged around the same response monitoring device, and the difference between the maximum amplitude values of the train passing signals in the frequency domain is less than a preset first amplitude threshold, the train passing information is generated.

The first amplitude threshold can be understood as a threshold for determining whether the maximum amplitude values of all frequency domain signals are similar, namely, if the maximum amplitude values are less than the first amplitude threshold, it is determined that the maximum amplitude values of all the frequency domain signals are similar.

In this embodiment, if it is determined that the signals outputted by more than half of the vibrating sensors arranged around the same transponder in the same time period have complete train passing signals, and the difference between the maximum amplitude values of the frequency domain signals of all the train passing signals is less than the preset first amplitude threshold, the train passing information is generated.

By way of example, with reference to the above description, 4 vibrating sensors can be arranged; when the response monitoring device determines that the signals outputted by 3 of the 4 vibrating sensors have the complete train passing signals, the maximum amplitude values of the train passing signals of the 3 vibrating sensors in the frequency domain are determined, and whether the difference among the 3 maximum amplitude values is less than the preset first amplitude threshold is determined; and the first amplitude threshold can be set to be 5% of the maximum value among the maximum amplitude values so as to flexibly adapt to various conditions. If the difference is less than the preset first amplitude threshold, the train passing information that can reflect train passing is generated.

According to the above technical solution in this embodiment, whether the signals outputted by the vibrating sensors have the train passing features, whether the train passing features are greater than the set time threshold, and whether there is a large number of sensors having the train passing features can be analyzed to accurately determine whether the train passes, thereby ensuring that the transponder can be timely and effectively monitored during the interval of the trains passing every two times, and improving the traffic safety.

As a second optional embodiment of this embodiment, on the basis of the above embodiment, the method further comprises the following steps.

In a2), a second transponder activation and monitoring instruction transmitted by the monitoring operation and maintenance device is received, and second activation energy is transmitted to the transponder according to the second transponder activation and monitoring instruction, in which, the second transponder activation and monitoring instruction is generated by the monitoring operation and maintenance device based on a received trigger signal for a monitoring start control.

The second transponder activation and monitoring instruction can be understood as an instruction transmitted by the monitoring operation and maintenance device to the response monitoring device after receiving the trigger signal for the monitoring start control when a service object (such as the maintenance personnel) has a demand for monitoring the transponder, and it is used for activating and monitoring the transponder in time. The monitoring start control can be understood as a user interface element or function for starting the response monitoring system to perform monitoring, and it can adopt forms of a button, a shortcut, a slider, a drop-down box and the like; and the monitoring start control allows to select to start monitoring for all transponders, so as to simultaneously acquire the statuses and data of all the transponders. The monitoring start control also allows to start monitoring for specific transponders by inputting or selecting line address information of the specific transponders, which is suitable for monitoring transponders which are arranged on a new line, modified in storage information (such as setting or cancelling a temporary speed limit command) and not monitored for a long time; and the line address information can be composed of a region number, a station number, a group number, and an in-group device serial number. The second activation energy can be understood as energy generated according to the second transponder activation and monitoring instruction and used for activating the transponder.

In this embodiment, after receiving the trigger signal generated by the operations such as clicking and dragging on the monitoring start control, the monitoring operation and maintenance device generates the second transponder activation and monitoring instruction and transmits the instruction to the corresponding response monitoring device. When receiving the second transponder activation and monitoring instruction, the response monitoring device transmits the second activation instruction to the transponder according to the second transponder activation and monitoring instruction.

In b2), a second energy response signal transmitted by the transponder after acquiring the second activation energy is received, and the transponder is monitored through the second energy response signal.

The second energy response signal can be understood as a signal transmitted by the transponder utilizing the second activation energy, and it can comprise the information stored by the transponder or the real-time information received from the lineside electronic unit (LEU).

In this embodiment, the second energy response signal transmitted by the transponder after acquiring the second activation energy is received; the message data in the second energy response signal and the status parameter information such as amplitude and frequency of the second energy response signal are analyzed to monitor the working status of the transponder, and the message data and the status parameter information are transmitted to monitoring operation and maintenance device for further analysis, monitoring, result display and the like. By way of example, the integrity of a transponder message transmission channel, the working status of the transponder, whether the temporary speed limit command is executed, and the like can be monitored.

According to the above technical solution in this embodiment, after receiving the second transponder activation and monitoring instruction that is generated and transmitted by the monitoring operation and maintenance device based on the trigger signal for the monitoring starting control, the second activation energy is transmitted to the transponder, and then the transponder is monitored through the second energy response signal transmitted by the transponder; therefore, the one or more transponders which are arranged on the new line, modified in storage information and not monitored for a long time can be actively, timely and efficiently monitored, the transponder with the potential fault hazard can be found in advance, and the emergency braking of the train caused by transponder faults can be reduced, thereby improving the train operating safety and transportation efficiency.

As a third optional embodiment of this embodiment, the method further comprises the following steps.

In a3), when the train passes the transponder, a third energy response signal transmitted by the transponder is automatically received, and the third energy response signal is generated by the transponder after acquiring third activation energy transmitted by an onboard antenna.

The third activation energy can be understood as energy that is transmitted to the transponder by the onboard antenna and is used for activating the transponder when the train passes the transponder. The third energy response signal can be understood as a signal transmitted by the transponder utilizing the third activation energy, and it can comprise the information stored by the transponder or the real-time information received from the lineside electronic unit (LEU), and therefore, the train control system can read and handle the information to realize functions of train-ground communication, train positioning and the like.

In this embodiment, when the train passes the transponder, the transponder receives the third activation energy transmitted by the onboard antenna, then generates the third energy response signal, and transmits the third energy response signal to the onboard antenna. In this process, the response monitoring device can automatically receive the third energy response signal transmitted to the onboard antenna by the transponder, namely, the communication between the transponder and the train is monitored and recorded in real time.

In b3), the transponder is monitored through the third energy response signal.

In this embodiment, the mode of monitoring the transponder through the third energy response signal is to verify the message data in the second energy response signal to determine whether the data transmitted by the transponder is complete and accurate; whether the transponder works normally can be determined by determining whether the transponder can normally generate the third energy response signal; and the performance of the transponder, such as the reliability and stability in signal transmission, can be monitored by analyzing the status parameter information such as the amplitude and frequency of the second energy response signal.

According to the above technical solution in this embodiment, the third energy response signal transmitted by the transponder based on the third activation energy when the train passes the transponder is automatically received, and the transponder is monitored through the third energy response signal, therefore, the performance and status of the transponder in normal work can be monitored in real time, and the accuracy of train positioning and the reliability of train-ground communication are ensured; and particularly, it can solve the problem that when a fault which cannot be reproduced occurs due to instantaneous degradation of the performance of the transponder, the train will brake emergently, but the fault cause of the transponder cannot be determined.

As one implementation mode of any above embodiment of the present invention, the step that the transponder is monitored through the energy response signals is further specifically optimized into the following steps.

In a4), the received energy response signals are transformed into digital signals, and baseband signals of the digital signals are acquired.

In this embodiment, the mode of transforming the received energy response signals into the digital signals is to transform the received energy response signals into the digital signals by an analog-to-digital converter (ADC); and the mode of acquiring the baseband signals of the digital signals can be to perform digital mixing on the digital signals by a digital down converter (DDC), then filter and sample the mixed signal, extract I and Q orthogonal components, namely the baseband signals, and store the baseband signals in an FIFO memory.

In order to better understand the above technical solution, a specific example is provided here. FIG. 2 is schematic diagram of a baseband signal extraction principle of a transponder monitoring method provided by an embodiment of the present invention. As shown in FIG. 2, a numerically controlled oscillator (NCO) generates 4.23 MHz sine and cosine orthogonal signals by a 42.3 MHz clock, and the digital signals which are collected by the ADC and stored in a double data rate memory (DDR), and correspondingly multiplied by the generated sine and cosine signals to obtain orthogonal digital signals DATAI and DATAQ; and after filtering is carried out through a finite impulse response (FIR) filter, the filtered data are sampled and the sampled data are stored in the FIFO memory.

In b4), an average amplitude of the digital signals is determined, and if the average amplitude is greater than a preset second amplitude threshold, data analysis logic is executed to determine the amplitude, code rate, and carrier frequency rate of the baseband signals; and the amplitude, code rate and carrier frequency rate of the baseband signals are recorded as transponder characteristic parameters.

The second amplitude threshold can be understood as a threshold for controlling whether to execute the data analysis logic, and it can be set according to empirical values obtained from multiple experiments.

In this embodiment, the average amplitude of the digital signals is determined according to the amplitude value of each sampling point of the digital signals and the number of the sampling points; if the average amplitude is greater than the preset second amplitude threshold, the baseband signals are acquired, and the data analysis logic is executed on the baseband signals, thus the amplitude, code rate and carrier frequency speed of the baseband signals can be determined; and the amplitude, code rate and carrier frequency speed of the baseband signals are recorded as the transponder characteristic parameters.

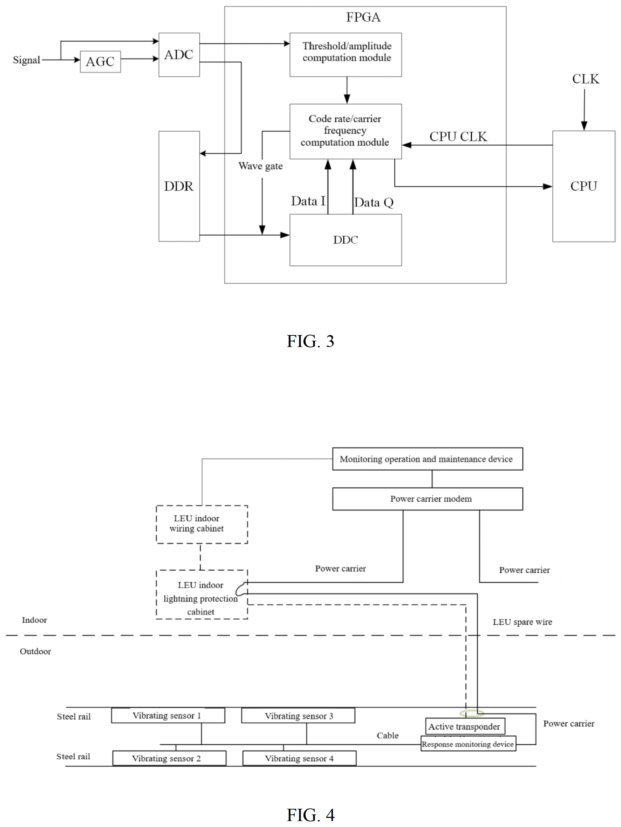

In order to better understand the above technical solution, a specific example is provided here. FIG. 3 is a schematic diagram of a data analysis logic of a transponder monitoring method provided by an embodiment of the present invention. As shown in FIG. 3, processing logic such as baseband signal extraction and data analysis can be carried out by an FPGA chip in the response monitoring device. Specifically, the ADC collects two signals, namely an unprocessed energy response signal and an energy response signal processed by an automatic gain control (AGC) circuit, and it is to be noted that the AGC circuit can process the amplitude of the signals to improve the flatness of the signal amplitude, thereby reducing zero-crossing drift. The FPGA chip transmits the digital signals which are acquired from the ADC and generated by collecting the unprocessed energy response signal to a threshold/amplitude computation module, then the average amplitude of the digital signals is computed, and whether the average amplitude is greater than the preset second amplitude threshold is determined; the digital signals which are acquired from the ADC and generated by collecting the energy response signal processed by the AGC are transmitted to a DDR for caching; and after the cached data in the DDR is read by the FPGA chip, I and Q baseband signals are generated through a DDC and transmitted to a code rate/carrier frequency computation module. When the threshold computation module determines that the average amplitude is greater than the preset second amplitude threshold, a computation start command will be transmitted to the code rate/carrier frequency computation module, then the code rate/carrier frequency computation module can compute the code rate and carrier frequency of the baseband signals according to the acquired I and Q baseband signals, and moreover, the computed average amplitude can be used as an amplitude computation result to be transmitted to the code rate/carrier frequency computation module; and it is to be understood that the code rate, carrier frequency, and amplitude computation result of the baseband signals can be read by the CPU in the response monitoring device using the code rate/carrier frequency computation module.

With reference to the above description, the specific computing resource configuration can be: the ADC samples from 2 paths, i.e., 42.3M * 2CH * 14bit; the DDR is configured for writing/reading; the DDC is configured for performing orthogonal transformation to baseband (carrier frequency of 4.23 MHz); the FIR filter is provided; the real part of the average amplitude, median amplitude, or other amplitude values can be taken as an amplitude computation result in amplitude computation; in carrier frequency computation, the maximum, minimum, or average carrier frequency over a period of time can be collected, involving a multiplier and an adder; for time-order control on DDR write pulse generation and DDR read pulse generation, it can be stored to the DDR in real time at 42.3MHz * 2 * 16bit, and read out after a delay τ (τ is written by the CPU, it depends on the processing bandwidth); and the DDC module is composed of 1 NCO core and 2*2 FIR filters (two signals), totaling 1 NCO and 4 FIR filters (8^{th}-order), shared logic elements (2603*1 + 686*4) * 2 signals processed = 5347 * 2 = 10694ALUT, accounting for 21.8% of total logic resources of 49,000 (LEs). Buffers used in other computation are ignored for simplicity.

Required multiplier resources: a total of 4 * 2 (I, Q) = 8 real multiplications are needed (two amplitude square computations, two paths), approximately 8 multipliers. According to a 5CEFA4F23I7N manual, it contains 132 multipliers, accounting for about 6%, so the requirement is met. The multiplier resources in the frequency computation module are not contained temporarily, and the remaining resources mentioned above are more than sufficient for the requirements.

In c4), whether the transponder characteristic parameters exceed the limit is determined according to a preset parameter standard range, and fault determination information relative to the transponder is generated.

In this embodiment, the parameter standard range can be preset according to the range specified by a transponder waveform specification, the parameter standard range can include ranges set for the amplitude, code rate and carrier frequency rate of the baseband signals; by comparing the obtained transponder characteristic parameters with the preset parameter standard, whether the transponder characteristic parameters are less than or greater than the parameter standard range and less than or greater than the difference of the parameter standard range can be determined, thereby generating the fault determination information relative to the transponder, in which, the fault determination information can comprise a fault determination result (such as normal or faulty) and early warning information (such as performance degradation level information).

In d4), the transponder characteristic parameters and the fault determination information are transmitted to the monitoring operation and maintenance device for further analysis, fault alarm and/or result display.

In this embodiment, the transponder characteristic parameters and the fault determination information are transmitted to the monitoring operation and maintenance device for further analysis, fault alarm and/or result display. By way of example, the monitoring operation and maintenance device can perform fault alarm and result display on the received fault determination information that reflects the existence of a fault, and can also store the result in the historical event; and the monitoring operation and maintenance device compares the received transponder characteristic parameters with historical transponder characteristic parameters, or compares the received transponder characteristic parameters with the transponder characteristic parameters corresponding to other adjacent transponders or transponders located on the same line, thereby more accurately determining whether there is a potential fault trend.

According to the above technical solution in this embodiment, by analyzing the amplitude, code rate and carrier frequency of the energy response signals after being transformed into the digital signals, the accuracy and timeliness of transponder fault determination can be improved, and therefore, the response speed to the transponder fault is increased; and moreover, the transponder characteristic parameters and the fault determination information are transmitted to the monitoring operation and maintenance device for further analysis, fault alarm and/or result display, so that whether the transponder has the potential fault or the performance seriously degrades can be more accurately analyzed, and the maintenance personnel are timely informed of checking or replacing the transponder, thereby improving the train operating safety.

As a fourth optional embodiment of this embodiment, the method further comprises the following steps.

In a5), when a status query command transmitted by the monitoring operation and maintenance device is received, self-inspection is performed, and self-inspection status information is generated and transmitted to the monitoring operation and maintenance device.

In this embodiment, when the monitoring operation and maintenance device generates and transmits the status query command to the response monitoring device at regular time or after receiving the trigger signal for a self-inspection start control, the response monitoring device will perform self-inspection when receiving the status query command transmitted by the operation and maintenance monitoring device. The self-inspection process can comprise inspection on each functional module and circuit in the response monitoring device to ensure its normal work. By way of example, the self-inspection content can comprise: inspecting whether a power circuit of the response monitoring device supplies power normally, inspecting whether communication interfaces of the response monitoring device relative to the monitoring operation and maintenance device and the transponder are smooth, inspecting data integrity of the memory in the response monitoring device to ensure that stored information is not damaged, and testing a signal processing circuit of the response monitoring device to ensure that the signal processing circuit can correctly handle the received transponder activation and monitoring instruction and generate the activation energy. After self-inspection is completed, the transponder will generate self-inspection status information. The information comprises a self-inspection result, such as whether there is fault detected, and the working status of each module. Then, the response monitoring device will transmit the self-inspection status information to the monitoring operation and maintenance device.

Correspondingly, after receiving the self-inspection status information, the monitoring operation and maintenance device can assess the health condition of the response monitoring device. If the self-inspection result shows that the response monitoring device is faulty or abnormal, the monitoring operation and maintenance device will trigger a corresponding alarm mechanism and inform the maintenance personnel of checking and maintenance.

According to the above technical solution in this embodiment, the response monitoring device is started to perform self-inspection and transmit the self-inspection status information to the monitoring operation and maintenance device, so that the problem in the response monitoring device can be found in time, and the effectiveness and accuracy of transponder monitoring are ensured.

As a fifth optional embodiment of this embodiment, the method further comprises the following steps.

In a6), configuration address information is checked with the monitoring operation and maintenance device in an encrypted communication mode.

It is to be understood that the number of the response monitoring devices can be flexibly configured according to the actual monitoring requirements and ranges of the railway lines, and unique configuration address information will be written in each response monitoring device during deploying. The configuration address information is preset and is used for identifying and distinguishing different response monitoring devices in a communication network. By way of example, the configuration address information of each response monitoring device can be determined according to the preset outdoor deployment address of each response monitoring device, and the configuration address information is written into the deployed response monitoring device through a terminal device (such as a mobile phone) in a wired communication (suitable for short-distance and fixed-position monitoring scenarios) or wireless communication (such as 5G communication) mode.

With reference to the above description, when it is needed to expand the monitoring range, new response monitoring devices can be added at the corresponding position, and after addition, it is needed to write in the configuration address information for the new response monitoring devices, and check with a pre-input line configuration table in the monitoring operation and maintenance device. When it is needed to remove some response monitoring devices due to faults or other reasons, the response monitoring devices can be deleted from the system, and after the response monitoring devices are deleted, it is also needed to check with the pre-input line configuration table in the monitoring operation and maintenance device, thereby ensuring accurate identification and management of the monitoring operation and maintenance device on the response monitoring devices, and further ensuring the correctness and effectiveness of communication.

In this embodiment, the mode of checking the configuration address information with the monitoring operation and maintenance device in the encrypted communication mode can be to issue a verification command to a response monitoring device communication interface (a slave node) by the monitoring operation and maintenance device using a related communication interface (a master node); the verification command comprises universal interface transmission parameters, the universal interface transmission parameters can comprise a master node calling request ID, the master node calling request ID is in a format of a time character string (YYYY_MM_dd_HH_mm_ss_SSS) that is accurate to milliseconds, and this parameter is returned when the interface returns, thereby facilitating verification from the slave node; by way of example, the master node calling request ID (reqId) can be represented as: "reqId": "2024_03_19_13_23_00_182"; an access key is also included and is used by the master node to issue a slave node verification notification, and by way of example, the access key (accessKey) can be represented as a form of accessKey=dev002@ + serial number; and an access encryption string is also included, namely, the master node calling request ID (reqId) and the access key (secretKey) can be encrypted through an encryption algorithm such as an MD5 algorithm, and by way of example, the access encryption string can be represented as secretKey = MD5(reqId + '_BDT_' + accessKey).

With reference to above description, after the verification command issued by the master node is received from the slave node, the configuration address information to be verified is transmitted to the master node, so that the master node can perform correctness verification, the master node can perform checking according to the pre-input line configuration table of the response detection device, and the line configuration table can be composed of a large area number, a partition number, a station number, a group number, an intra-group device serial number, distance information and the like. It is to be noted that the slave node needs to transmit the received universal interface transmission parameters and a device ID to the master node at the same time. After receiving the configuration address information transmitted by the slave node and performing correctness verification, the master node will transmit the correctness verification result to the slave node. By way of example, the correctness verification result can comprise a verification determination result (such as Boolean type field true or false), a return code indicating success or failure (200 for success, 500 and others for failure (either the verification determination result or the code can be parsed)), a return description (such as verification success or verification failure), a timestamp of a return result of the master node, the reqId passed when the master node transmits, a verification result code (such as 0 = message matches successfully, 1 = corresponding configuration file does not exist, 2 = all numbers do not match, 3 = partial information does not match, and 4 = others), a description of the verification result (Chinese description corresponding to the Code), and a correct message (i.e., correct number information corresponding to device number (acquired from a configuration file)).

According to the above technical solution in this embodiment, the configuration address information in the response monitoring device and the pre-input response monitoring device address information in the operation and maintenance device are checked in the encrypted communication mode, in order to prevent wrong configuration, thereby ensuring the effectiveness of subsequent monitoring.

In order to better understand the transponder monitoring method provided by the embodiment of the present invention, a specific example is provided here. FIG. 4 is a system architecture schematic diagram of a transponder monitoring method provided by an embodiment of the present invention.

As shown in FIG. 4, the response monitoring device is mounted below an outdoor active transponder, and the response monitoring device is connected to the vibrating sensors arranged at the steel rails on the both sides around the response monitoring device through cables so as to provide required power for each vibrating sensor and receive electric signals outputted by the vibrating sensor. A response monitoring unit can communicate with an indoor monitoring operation and maintenance device by a lineside electronic unit LEU spare wire using a 220V power carrier, and the LEU spare wire is connected to an indoor deployed power carrier modem through an LEU indoor lightning protection cabinet; the power carrier modem can extract and modulate the communication data from the power cable, modulate the communication data, load the communication data to current and transmit the communication data to the power cable; and the power carrier modem can establish connection with a plurality of devices. It is to be noted that the power carrier modem is also configured in the response monitoring device to realize the same function, and the active transponder can also establish connection and communicate with the LEU through the cable. In addition, an LEU indoor wiring cabinet is connected to the monitoring operation and maintenance device through a reserved cable, so that the message data transmitted to the LEU by the LEU indoor wiring cabinet and the lightning protection cabinet can also be transmitted to the monitoring operation and maintenance device at the same time, thereby facilitating the monitoring operation and maintenance device to determine whether the transponder executes the command contained in the message data transmitted by the LEU by checking the received message data transmitted by the transponder.

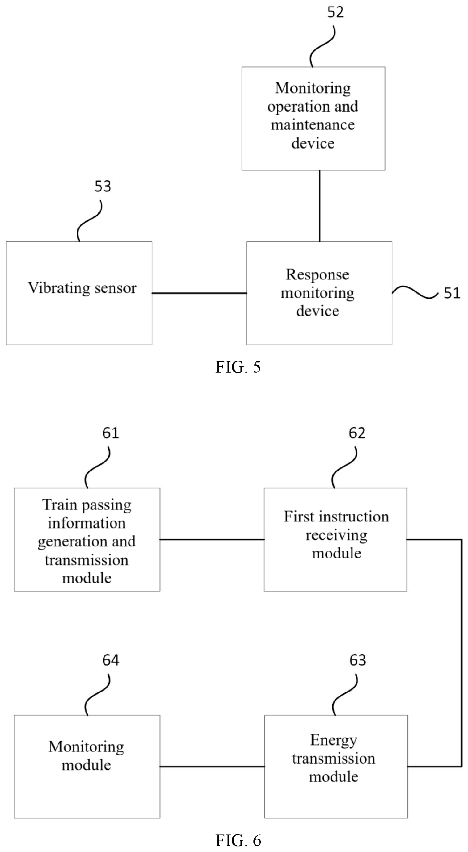

FIG. 5 is a schematic structural diagram of a transponder monitoring system provided by an embodiment of the present invention. As shown in FIG. 5, the system comprises: a response monitoring device 51, a monitoring operation and maintenance device 52, and a vibrating sensor 53; the response monitoring device is arranged below a transponder, the vibrating sensor surrounds the response monitoring device and is arranged on a steel rail around the response monitoring device; the power required by the vibrating sensor is provided by the response monitoring device; and communication transmission between the response monitoring device and the monitoring operation and maintenance device is performed in a power carrier mode.

FIG. 6 is a schematic structural diagram of a response monitoring device in a transponder monitoring system provided by an embodiment of the present invention. As shown in FIG. 6, the response monitoring device comprises: a train passing information generation and transmission module 61, a first instruction receiving module 62, an energy transmission module 63, and a monitoring module 64, in which,
the train passing information generation and transmission module 61 is configured for when detecting that a train pulls in and pulls out, generating train passing information, and transmitting the train passing information to the monitoring operation and maintenance device;
the first instruction receiving module 62 is configured for receiving a first transponder activation and monitoring instruction transmitted by the monitoring operation and maintenance device, the first transponder activation and monitoring instruction being generated by the monitoring operation and maintenance device based on the train passing information;
the energy transmission module 63 is configured for transmitting first activation energy to the transponder according to the first transponder activation and monitoring instruction; and
the monitoring module 64 is configured for receiving a first energy response signal transmitted by the transponder after acquiring the first activation energy, and monitoring the transponder through the first energy response signal.

According to the transponder monitoring system provided by the embodiment, the system comprises: when detecting that the train pulls in and pulls out, generating the train passing information, and transmitting the train passing information to the monitoring operation and maintenance device; receiving the first transponder activation and monitoring instruction transmitted by the monitoring operation and maintenance device, the first transponder activation and monitoring instruction being generated by the monitoring operation and maintenance device based on the train passing information; transmitting the first activation energy to the transponder according to the first transponder activation and monitoring instruction; and receiving the first energy response signal transmitted by the transponder after acquiring the first activation energy, and monitoring the transponder through the first energy response signal. According to the method, after detecting that the train pulls in and pulls out, the first activation energy is transmitted to the transponder, and the first energy response signal transmitted by the transponder is received, thus activation and monitoring on the transponder can be adaptively started at least once during an interval of two-time passing of the train, the timeliness of monitoring on the transponder is ensured, the monitoring efficiency is improved, and the normal working function of the transponder is prevented from being affected when the train passes; moreover, the number of starts of the transponder is reduced through an adaptive starting mechanism, therefore, the failure rate of the transponder is decreased, and furthermore, the frequency and cost of maintenance and replacement are reduced; and the transponder is monitored through the first energy response signal, so that the transponder with a hidden fault danger or fault condition can be early warned, effectively ensuring safe operation of the train.

Further, the train passing information generation and transmission module 61 is specifically configured for:
transforming the received signal outputted by each vibrating sensor into a frequency domain signal, and determining whether the signal outputted by the vibrating sensor has train passing features according to amplitude values of each frequency domain signal in a specific frequency range;
if the signal has the train passing features, determining whether the duration of the train passing features is greater than a set time threshold, and if yes, determining the signal having the train passing features to be a single complete train passing signal; and
in the same time period, if the number of vibrating sensors having the single complete train passing signal accounts for more than half of the number of all vibrating sensors arranged around the same response monitoring device, and the difference between the maximum amplitude values of the train passing signals in the frequency domain is less than a preset first amplitude threshold, generating the train passing information.

Further, the response monitoring device further comprises a second instruction receiving module which is specifically configured for:
receiving a second transponder activation and monitoring instruction transmitted by the monitoring operation and maintenance device, and transmitting second activation energy to the transponder according to the second transponder activation and monitoring instruction, the second transponder activation and monitoring instruction being generated by the monitoring operation and maintenance device based on a received trigger signal for a monitoring start control; and
receiving a second energy response signal transmitted by the transponder after acquiring the second activation energy, and monitoring the transponder through the second energy response signal.

Further, the response monitoring device further comprises a third instruction receiving module which is specifically configured for:
when the train passes the transponder, automatically receiving a third energy response signal transmitted by the transponder, the third energy response signal being generated by the transponder after acquiring the third activation energy transmitted by an onboard antenna; and
monitoring the transponder through the third energy response signal.

Further, the response monitoring device further comprises a signal processing module which is specifically configured for:
transforming the received energy response signals into digital signals, and acquiring baseband signals of the digital signals;
determining the average amplitude of the digital signals, and if the average amplitude is greater than a preset second amplitude threshold, executing data analysis logic to determine the amplitude, code rate, and carrier frequency rate of the baseband signals, and recording the amplitude, code rate and carrier frequency rate of the baseband signals as transponder characteristic parameters;
determining whether the transponder characteristic parameters exceed the limit according to a preset parameter standard range, and generating fault determination information relative to the transponder; and
transmitting the transponder characteristic parameters and the fault determination information to the monitoring operation and maintenance device for further analysis, fault alarm and/or result display.

Further, the response monitoring device further comprises a self-inspection module which is specifically configured for:
when receiving a status query command transmitted by the monitoring operation and maintenance device, performing self-inspection, and generating self-inspection status information and transmitting to the monitoring operation and maintenance device.

Further, the response monitoring device further comprises a checking module which is specifically configured for:
checking configuration address information with the monitoring operation and maintenance device in an encrypted communication mode.

The transponder monitoring system provided by the embodiment of the present invention can execute the transponder monitoring method provided by any embodiment of the present invention and has corresponding function modules and beneficial effects during executing the method.

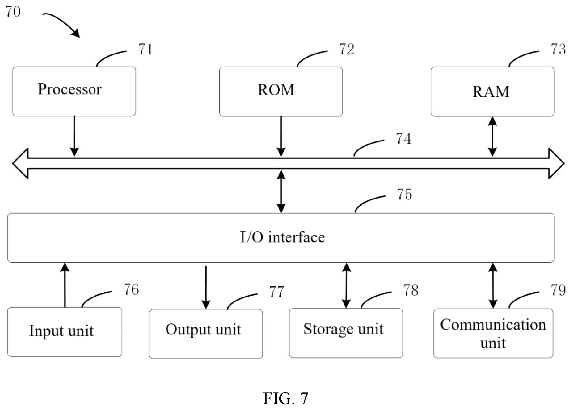

FIG. 7 is a schematic structural diagram of an electronic device 70 for implementing the embodiments of the present invention. The electronic device represents various forms of digital computers, such as laptops, desktop computers, workstations, personal digital assistants, servers, blade servers, mainframes, and other suitable computers. The electronic device may also represent various forms of mobile apparatuses, such as personal digital assistants, cellular phones, smart phones, wearable devices (e.g., helmets, glasses, and watches), and other similar computing devices. The components shown herein, connections and relationships thereof, and functions thereof are merely examples, and are not intended to limit the implementations of the present invention described and/or claimed herein.

As shown in FIG. 7, the electronic device 70 comprises at least one processor 71, and a memory in communication with the at least one processor 71, such as a read-only memory (ROM) 72 and a random-access memory (RAM) 73. The memory stores computer programs that can be executed by the at least one processor. The processor 71 can execute various appropriate actions and processes according to the computer programs stored in the read-only memory (ROM) 72 or loaded from a storage unit 78 into the random-access memory (RAM) 73. Various programs and data required in the operation of the electronic device 70 can also be stored in RAM 73. The processor 71, the ROM 72, and the RAM 73 are connected to each other via a bus 74. An input/output (I/O) interface 75 is also connected to the bus 74.

Multiple components of the electronic device 70 are connected to the I/O interface 75, comprising: an input unit 76, such as a keyboard, and a mouse; an output unit 77, such as various types of displays, and speakers; the storage unit 78, such as a disk, and an optical disc; and a communication unit 79, such as a network card, a modem, and a wireless communication transceiver. The communication unit 79 allows the electronic device 70 to exchange information/data with other devices through computer networks such as the Internet and/or various telecommunication networks.

The processor 71 can be any general and/or dedicated processing component with processing and computing capabilities. Some examples of the processor 71 comprise, but are not limited to, a central processing unit (CPU), a graphics processing unit (GPU), various dedicated artificial intelligence (AI) computing chips, processors that run machine learning model algorithms, digital signal processors (DSPs), and any suitable processors, controllers, microcontrollers, and the like. The processor 71 executes the various methods and processes described above, such as the transponder monitoring method.

In some embodiments, the transponder monitoring method may be implemented as a computer program, which is tangibly embodied in a computer-readable storage medium, such as the storage unit 78. In some embodiments, all or part of the computer program can be loaded and/or installed onto the electronic device 70 via the ROM 72 and/or communication unit 79. When the computer program is loaded into the RAM 73 and executed by the processor 71, one or more steps of the transponder monitoring method described above can be performed. Optionally, in other embodiments, the processor 71 can be configured to perform the transponder monitoring method by any other suitable manner (e.g., via firmware).

The various implementation modes of the systems and technologies described above can be implemented in digital electronic circuit systems, integrated circuit systems, field-programmable gate arrays (FPGAs), application-specific integrated circuits (ASICs), application-specific standard products (ASSPs), system-on-chip (SOC) systems, complex programmable logic devices (CPLDs), computer hardware, firmware, software, and/or any combination thereof. These various embodiments may comprise implementations in one or more computer programs, which can be executed and/or interpreted on a programmable system comprising at least one programmable processor. Such programmable processor can be a dedicated or general programmable processor, and can receive data and instructions from a storage system, at least one input apparatus, and at least one output apparatus, and transmit data and instructions to the storage system, the at least one input apparatus, and the at least one output apparatus.

The computer programs for implementing the method in the present invention can be written in any combination of one or more programming languages. These computer programs can be provided to a general computer, a dedicated computer, or the processor of other programmable data processing devices, so that when the computer program is executed by the processor, the functions/operations specified in the flow charts and/or block diagrams can be implemented. The computer programs can be executed entirely in a machine, partially in a machine, partially in a machine as an independent software package and partially in a remote machine, or entirely in a remote machine or server.

In the context of the present disclosure, the machine-readable medium can be a tangible medium that may contain or store computer programs for use by or in combination with an instruction execution system, apparatus, or device. The machine-readable medium can comprise, but is not limited to, electronic, magnetic, optical, electromagnetic, infrared, or semiconductor system, apparatus, or device, or any suitable combination of the foregoing. Optionally, the machine-readable medium can be a machine-readable signal medium. A more specific example of the machine-readable storage medium may comprise an electrical connector based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

To provide interaction with the user, the systems and technologies described herein can be implemented in the electronic apparatus, the electronic device comprising: a display apparatus for displaying information to the user (for example, a CRT (cathode ray tube) or LCD (liquid crystal display) monitor); and a keyboard and pointing apparatus (for example, a mouse or trackball) through which the user can provide input to the electronic apparatus. Other types of apparatuses can also be used to provide interaction with the user; for example, feedback provided to the user can be in any form of sensory feedback (for example, visual feedback, auditory feedback, or tactile feedback); and the input from the user can be received in any form (comprising voice input, speech input, or tactile input).

The systems and technologies described herein can be implemented in a computing system that comprises backend components (e.g., as a data server), or in a computing system that comprises middleware components (e.g., an application server), or in a computing system that comprises frontend components (e.g., a user computer with a graphical user interface or a web browser, through which the user can interact with implementations of the systems and technologies described herein), or in any combination of such backend, middleware, or frontend components. The components of the system can be interconnected via digital data communication in any form or medium (e.g., communication networks). Examples of communication networks comprise: local area networks (LANs), wide area networks (WANs), blockchain networks, and the Internet.

The computing system can comprise clients and servers. The clients and the servers are generally distant from each other and usually interact through the communication network. The client-server relationship is established by running computer programs that have a client-server relationship with each other on the respective computers. The server can be a cloud server, also known as a cloud computing server or cloud host, which is a host product in the cloud computing service system, designed to overcome the defects of traditional physical hosts and VPS services, such as high management difficulty and weak business expandability.

It is to be understood that various forms of processes shown above can be used to perform steps of reordering, adding or deleting. For example, the steps described in the present invention can be performed in parallel, sequentially, or in different orders, as long as the desired results of the technical solutions of the present invention can be achieved. There are no limitations herein.

The above specific embodiments do not constitute a limitation of the scope of protection of the present invention. Those skilled in the art should understand that various modifications, combinations, sub-combinations, and substitutions can be made according to design requirements and other factors. Any modifications, equivalent replacements, and improvements made within the spirit and principle of the present invention should be comprised within the scope of protection of the present invention.

## Claims

1. A transponder monitoring method, applied to a transponder monitoring system which comprises: a response monitoring device and a monitoring operation and maintenance device that is arranged below a transponder, the method executed by the response monitoring device comprising:
when detecting that a train pulls in and pulls out, generating train passing information, and transmitting the train passing information to the monitoring operation and maintenance device;
receiving a first transponder activation and monitoring instruction transmitted by the monitoring operation and maintenance device, the first transponder activation and monitoring instruction being generated by the monitoring operation and maintenance device based on the train passing information;
transmitting first activation energy to the transponder according to the first transponder activation and monitoring instruction; and
receiving a first energy response signal transmitted by the transponder after acquiring the first activation energy, and monitoring the transponder through the first energy response signal.

2. The method according to claim 1, wherein the transponder monitoring system further comprises at least one vibrating sensor, and the vibrating sensor surrounds the response monitoring device and is arranged on steel rails around the response monitoring device; the power for the vibrating sensor is provided by the response monitoring device; correspondingly, the when detecting that a train pulls in and pulls out, generating the train passing information, comprises:
transforming the received signal outputted by each vibrating sensor into a frequency domain signal, and determining whether the signal outputted by the vibrating sensor has train passing features according to amplitude values of each frequency domain signal in a specific frequency range;
if the signal has the train passing features, determining whether the duration of the train passing features is greater than a set time threshold, and if yes, determining the signal having the train passing features to be a single complete train passing signal; and
in the same time period, if the number of vibrating sensors having the single complete train passing signal accounts for more than half of the number of all vibrating sensors arranged around the same response monitoring device, and the difference between the maximum amplitude values of the train passing signals in the frequency domain is less than a preset first amplitude threshold, generating the train passing information.

3. The method according to claim 1, further comprising:
receiving a second transponder activation and monitoring instruction transmitted by the monitoring operation and maintenance device, and transmitting second activation energy to the transponder according to the second transponder activation and monitoring instruction, the second transponder activation and monitoring instruction being generated by the monitoring operation and maintenance device based on a received trigger signal for a monitoring start control; and
receiving a second energy response signal transmitted by the transponder after acquiring the second activation energy, and monitoring the transponder through the second energy response signal.

4. The method according to claim 1, further comprising:
when the train passes the transponder, automatically receiving a third energy response signal transmitted by the transponder, the third energy response signal being generated by the transponder after acquiring the third activation energy transmitted by an onboard antenna; and
monitoring the transponder through the third energy response signal.

5. The method according to any one of claims 1 to 4, wherein the monitoring the transponder through the energy response signals, comprises:
transforming the received energy response signals into digital signals, and acquiring baseband signals of the digital signals;
determining the average amplitude of the digital signals, and if the average amplitude is greater than a preset second amplitude threshold, executing data analysis logic to determine the amplitude, code rate, and carrier frequency rate of the baseband signals, and recording the amplitude, code rate and carrier frequency rate of the baseband signals as transponder characteristic parameters;
determining whether the transponder characteristic parameters exceed the limit according to a preset parameter standard range, and generating fault determination information relative to the transponder; and
transmitting the transponder characteristic parameters and the fault determination information to the monitoring operation and maintenance device for further analysis, fault alarm and/or result display.

6. The method according to claim 1, wherein communication transmission between the response monitoring device and the monitoring operation and maintenance device is performed in a power carrier mode.

7. The method according to claim 1, further comprising:
when receiving a status query command transmitted by the monitoring operation and maintenance device, performing self-inspection, and generating self-inspection status information and transmitting to the monitoring operation and maintenance device.

8. The method according to claim 1, further comprising:
checking configuration address information with the monitoring operation and maintenance device in an encrypted communication mode.

9. A transponder monitoring system, comprising: a response monitoring device and a monitoring operation and maintenance device which is arranged below a transponder, wherein
the response monitoring device comprises:
a train passing information generation and transmission module configured for when detecting that a train pulls in and pulls out, generating train passing information, and transmitting the train passing information to the monitoring operation and maintenance device;
a first instruction receiving module configured for receiving a first transponder activation and monitoring instruction transmitted by the monitoring operation and maintenance device, the first transponder activation and monitoring instruction being generated by the monitoring operation and maintenance device based on the train passing information;
an energy transmission module configured for transmitting first activation energy to the transponder according to the first transponder activation and monitoring instruction; and
a monitoring module configured for receiving a first energy response signal transmitted by the transponder after acquiring the first activation energy, and monitoring the transponder through the first energy response signal.

10. An electronic device, serving as a transponder device for the transponder monitoring system according to claim 9, comprising:
at least one processor; and
a memory in communication connection with the at least one processor; and
the memory stores a computer program that can be executed by the at least one processor, and the at least one processor executes the transponder monitoring method according to any one of claims 1 to 8 by executing the computer program.

11. A computer-readable storage medium, storing a computer instruction, wherein the computer instruction is used for enabling a processor to execute the transponder monitoring method according to any one of claims 1 to 8.

12. A computer program product, comprising a computer program, wherein the computer program implements the transponder monitoring method according to any one of claims 1 to 8 when executed by a processor.
